# EUROPEAN PATENT SPECIFICATION

(11) **EP 0 641 618 B1**
(45) Date of publication and mention of the grant of the patent: **14.07.1999**
(21) Application number: 94201084.4
(22) Date of filing: 20.04.1994
(51) Int. Cl.: B23D 17/00, E02F 3/96, E02F 3/36

(54) **A device for crushing and/or cutting material**
Vorrichtung zum Brechen und Schneiden von Materialien
Dispositif pour concasser et couper des matériaux

(30) Priority: 02.09.1993 NL 9301517
(43) Date of publication of application: 08.03.1995
(73) Proprietor: METAALWARENFABRIEK A.P. VERACHTERT B.V., 5203 DB 's-Hertogenbosch (NL)
(72) Inventor: de Gier, Gertrudis Maria Gerardus, NL-5334 JZ Velddriel (NL); van Doornmalen, Adrianus Matheus Clasina Maria, NL-5324 AV Ammerzoden (NL); Wingens, Hendrikus Theodorus Johanna Josephus, NL-5374 JV Schayk (NL)
(74) Representative: Vollebregt, Cornelis Jacobus, Ir.

(56) References cited:
- EP-A- 0 435 702
- EP-A- 0 453 773
- DE-A- 3 018 831
- DE-A- 3 346 235
- US-A- 4 686 767

## Description

The invention relates to a device for crushing and/or cutting material, said device being provided with a frame having coupling means by which said frame can be coupled to the jib of an excavator or the like, whilst a first jaw occupying a fixed position with respect to the frame during operation is connected to the frame, as is a second jaw coooperating with said first jaw, said second jaw being pivotable about a pivot pin with respect to the frame by means of a setting cylinder in a direction towards the first jaw and in a direction away from the first jaw and wherein said first jaw is detachably connected to the frame by means of said pivot pin and a second pin located at some distance from said pivot pin, and the second jaw is detachably connected to the frame by means of said pivot pin and a pin coupling the second jaw to the setting cylinder.

Such a device is known from EP-A-0 435 702. In said known device both jaws are pivotable with respect to the frame whereby for each jaw there has been provided a separate setting cylinder extending substantially parallel to each other. Thereby it has been noted in EP-A-0 435 702 that one of said cylinders could be replaced by a rigid link so that the corresponding jaw will be stationary with respect to the frame.

Now according the invention said first jaw has been provided with coupling means near said pivot pin, which coupling means cooperate with coupling means secured to the frame so that said coupling means may be hooked together in order to couple the jaws to the frame and whereby said coupling means are constructed in such a manner, that the jaws coupled to the frame by te coupling means are pivotable relative to the frame at the location of the coupling means, about a pivot axis extending parallel to the pivot pin.

By using a construction of this kind it is possible to exchange the jaws coupled to the frame, which are very well suited for carrying out a particular activity, for jaws which are very well suited for a different activity. Thus this device can be optimally adapted for carrying out different activities, such as for example crushing concrete, cutting iron sections and/or scrap iron, cutting and splitting wood etc., by exchanging the jaws whilst using one and the same device.

Whilst using one and the same device it is thus only necessary to purchase a number of different pairs of jaws for carrying out different activities, which will involve a considerable saving in comparison with purchasing a number of complete, mutually different devices, which was usual up to now.

The invention will be explained in more detail hereafter with reference to the accompanying Figures.
Figure 1 is a diagrammatic side view of the device according to the invention, with the jaws in their open position.
Figure 2 shows the device illustrated in Figure 1, partly in side elevation and partly in section, with the jaws in their closed position.
Figure 3 is a side view of the device shown in Figures 1 and 2, showing the jaws spaced from the frame of the device.
Figure 4 is an elevational view of the jaws, seen in the direction according to the arrows IV and IV' respectively in Figure 1.
Figure 5 shows a detail of the suspension of the setting cylinder within the frame.
Figure 6 is a sectional view of the jaws at the location of the pivot pin, by means of which the two jaws are connected to the frame of the device.
Figure 7 is a sectional view of the jaws at the location of the further pin by means of which the first jaw is connected to the frame.
Figure 8 is a diagrammatic view of a valve mechanism and the setting cylinder.
Figure 9 is a perspective view, showing the parts in spaced-apart relationship and a part of a jaw and a tooth mounted on said jaw.
Figure 10 is a perspective view of the tooth fixed to the jaw.
Figure 11 is a side view of two jaws in particular intended for being used in crushing concrete.
Figure 12 is an elevational view of Figure 11, seen according to the arrow XII, with the jaws pivoted further apart.
Figure 13 shows the jaws depicted in Figure 11, seen from the other side.
Figure 14 is a side view of two jaws in particular intended for cutting scrap iron and/or iron sections.
Figure 15 is an elevational view of Figure 14, with the jaws pivoted further apart.
Figure 16 is an elevational view from the other side of the jaws illustrated in Figure 14.
Figure 17 is a side view of two jaws in particular intended for cutting and splitting wood, logs, root ends and the like.
Figure 18 is a side view of Figure 17, with the jaws pivoted further apart.
Figure 19 is a side view of the jaws shown in Figure 17, seen from the other side.
Figure 20 is a diagrammatic side view of two jaws, wherein one jaw is provided with means for quickly coupling the jaws to a frame.
Figure 21 shows the jaws illustrated in Figure 20, said jaws being coupled to a frame.
Figure 22 diagrammatically shows an excavator, whereby the device illustrated in Figure 21 is coupled to the jib of said excavator.
Figure 23 shows the device illustrated in Figure 22 without the excavator, in a position in which the device is ready for being uncoupled.
Figure 24 shows various successive stages during the uncoupling of the device.

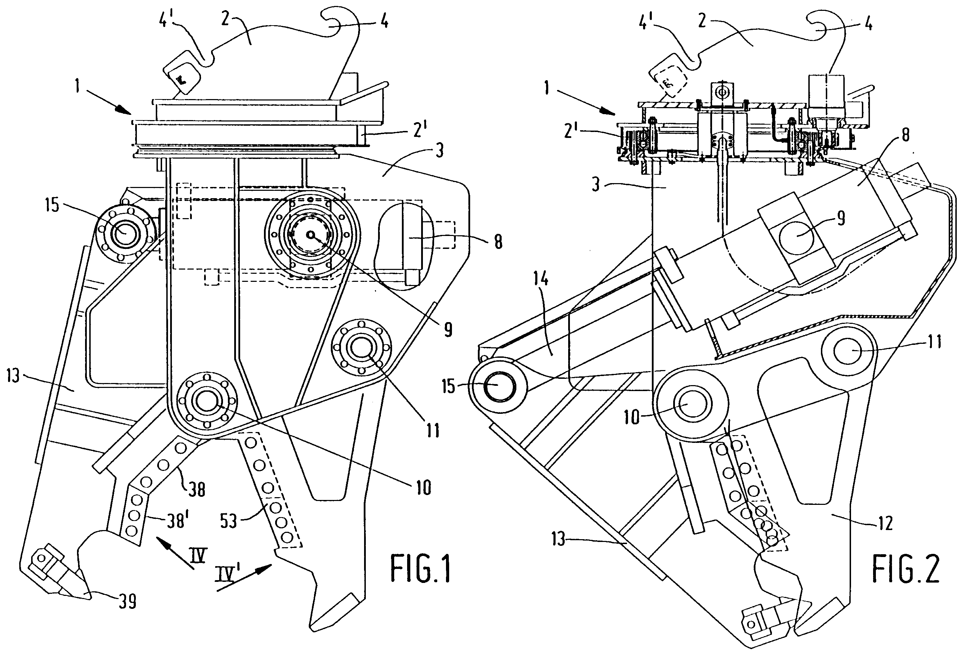

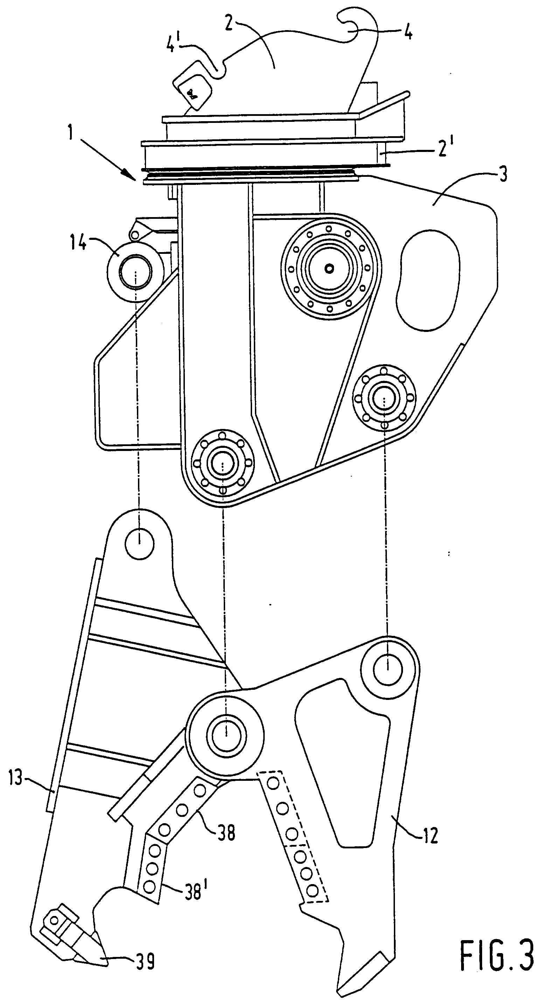

The device shown in Figures 1 - 3 comprises a frame 1 comprising a first frame part 2, which frame part 2 is coupled to a second frame part 3 by means of a turn table 2', in such a manner that the two frame parts 2 and 3 are rotatable with respect to each other by means (not shown), for example hydraulically operated setting means which are known per se, whereby a rotary valve for the supply and discharge of fluid for a setting cylinder is provided.

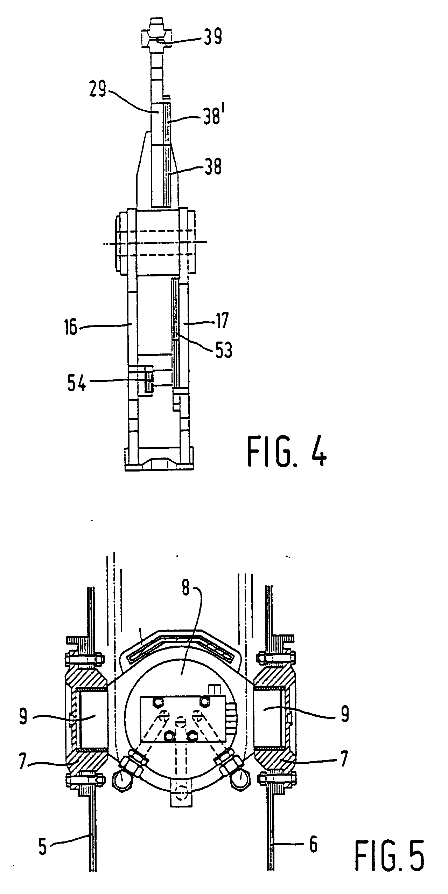

The frame part 2 is provided with coupling means 4, 4' which are known per se, by which the device can be coupled to for example the end of an excavator arm. As is shown in more detail in Figure 5 the frame part 3 comprises spaced-apart plates 5 and 6 extending parallel to each other. Aligned holes, in which bearings 7 are mounted, are provided in said plates. Journals 9, which are fixedly connected to a setting cylinder 8, are located within said bearings, in such a manner that the setting cylinder 8 is pivotally supported in the frame 1 by means of said journals 9.

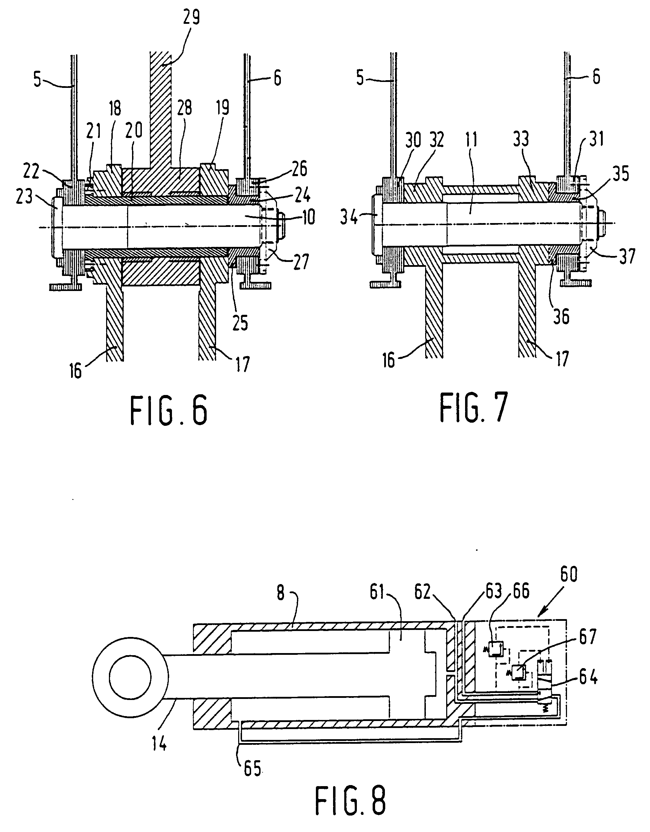

The plates 5 and 6 furthermore support a pivot pin 10 (Figure 6). A first jaw 12 is fixed to the frame part 3 of the frame 1 by means of said pivot pin 10 and a pin 11 being spaced from said pivot pin 10 and extending parallel thereto. Furthermore a second movable jaw 13 is pivotable about the pivot pin 10 by means of the setting cylinder 8, for which purpose the end of a piston rod 14 of the setting cylinder 8 is coupled to one end of the pivotal jaw 13 by means of a pin 15 extending parallel to the pivot pin 10.

As is shown in more detail in Figure 6 the first or fixed jaw 12 comprises two spaced-apart, parallel plate-shaped parts 16 and 17, which are provided with hubs 18 and 19 respectively, in which a bush 20 is accommodated. The bush 20 is at one side provided with an outwardly extending collar 21, which is fixed to the hub 18 by means of bolts (not shown). A hub 22 fixed to the plate 5 and surrounding the pin 10 abuts against the end of the collar 21 remote from the hub 18 and projecting beyond said hub. A head 23 secured to the pin 10 abuts against the outer side of the hub 22. The length of the bush 20 is designed such that the end of the bush 20 remote from the collar 21 does not project beyond the hub 19, but is spaced by some distance from the end face of the hub 19 remote from the collar 21.

A bush 24 is provided on the end of the pin 10 projecting beyond the hub 19, said bush being provided with a circumferential collar 25 projecting radially outwards, which abuts against the end face of the hub 19. The bush 24 is surrounded by a hub 26 being integral with the plate 6 of the frame part 3. When seen in the longitudinal direction of the pin 10 the width of the hub 26 is smaller than the length of the part of the bush 24 surrounded by the hub.

A nut 27, which is screwed on the reduced threaded end of the pin 10, abuts against the end face of the bush 24 remote from the collar 25.

A hub 28 forming part of the movable jaw 13 and being secured to a plate 29 forming part of the movable jaw is pivoted about the part of the bush 20 between the hubs 18 and 19. It will be apparent that by tightening the nut 27 the two hubs 18 and 19 of the fixed jaw will be moved towards each other and be pressed against the sides of the hub 28 of the movable jaw 13, so that the two jaws 12 and 13 can be retained on the pin 10 without play.

In order to ensure that the pin 10 can be readily mounted within the bush 20 or be removed therefrom the design of the outer circumference of the pin 10 and the inner circumference of the bush 20 is such that the outer circumference of the pin 10 is only in direct contact with the inner circumference of the bush 20 along part of the length of said bush 20 near the ends of the bush 20, whereby of course the diameter of the part of the pin 10 located near the head 23 of the pin 10 is slightly larger than the other part of the pin 10.

As is furthermore shown in Figure 7 the plates 5 and 6 of the frame part 3 are provided with further hubs 30 and 31 for accommodating the pin 11. The pin 11 furthermore extends into the hubs 32 and 33 connected to the plates 16 and 17 of the fixed jaw 12.

At one end the pin 11 has a head 34 integral with the pin, which head abuts against the outer side of the hub 30 forming part of the frame part 3. The part of the pin 11 joining the head 34 is accommodated with a close fit in the hubs 30 and 32. The part of the pin 11 joining said part is slightly reduced with respect to the part of the pin 11 located within the hubs 30 and 32.

The reduced part of the pin 11 is accommodated with a close fit within the hub 33, whilst the end of the pin projecting beyond the hub 33 is surrounded by a bush 35, which is provided with a circumferential collar 36 abutting against the outer side of the hub 33. The bush 35 is accommodated with a close fit within the hub 31 connected to the plate 6 of the frame part 3. A nut 37 is screwed on the threaded free end of the pin 11. The construction is thereby such that upon tightening of the nut 37 the collar 36 of the bush 35 is pressed against the outer side of the hub 33 and the hub 30 is pulled against the outer side of the hub 32 via the head 34, so as to mount the fixed jaw 12 on the pin 11 without play.

As is shown in more detail in Figures 1 - 3 the pivotable jaw 13 comprises two adjoining knives 38 and 38', whose cutting edges include an obtuse angle with each other. A crusher tooth 39 is provided near the free end of the jaw 13.

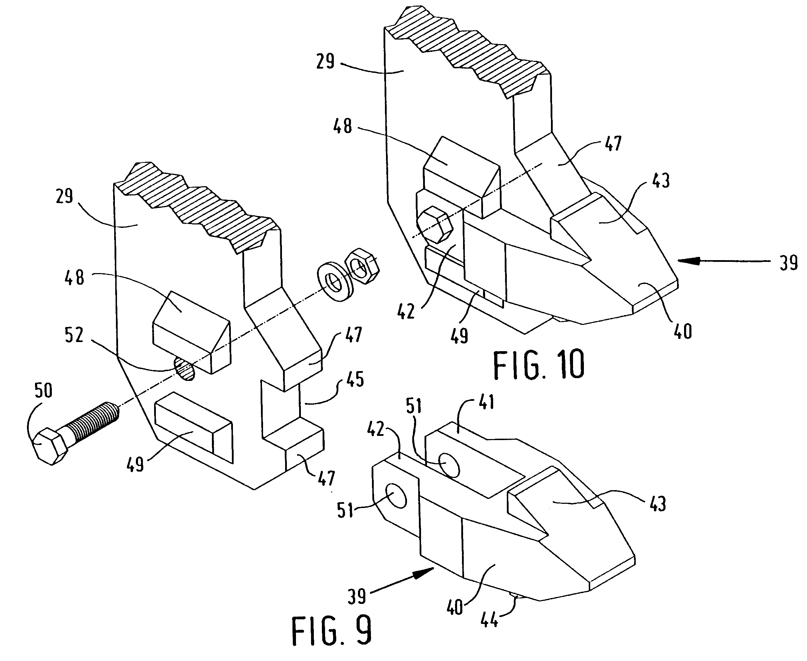

As is illustrated more particularly in Figures 9 and 10 the crusher tooth has a body 40 more or less in the shape of a truncated pyramid blending into two wings 41 and 42 extending parallel to each other. Said body 40 in the shape of a truncated pyramid is provided with projecting cams 43 and 44 on two opposite sides.

Near the free end of the plate 29 of the pivotable jaw 13 a recess 45 is provided, which is bounded by two noses 47, one lying above the other. The construction is thereby such that the free end of the plate 29 can be accommodated between the wings 41 and 42 with a close fit, whereby the projecting noses 47 will closely abut against surfaces 41a of the body 40 and the cams 43 and 44 will abut against the ends of the noses 47.

The ends of the wings 41 and 42 are retained between cams 48 and 49 secured to the sides of the plate 29.

Finally the crusher tooth 39 is fixed to the plate 29 by means of a bolt 50, which is passed through holes 51 provided in the wings 41 and 42 and through a hole 52 provided in the plate 29.

As a result of the above-described manner of retaining the tooth 39 by means of the various cooperating cams and noses, no shearing force or the like will be exerted on the bolt during operation, so that undesirable deformations of and damage to the bolt will be avoided, as a result of which the bolt will be readily removable at all times. At the same time the bolt head and the nut are protected by the thickened parts of the wings 41 and 42 located in front thereof. Accordingly also the tooth 39 will be readily removable so as to be exchanged in case of wear. Furthermore it is possible now to use a wear-resistant material for this tooth, which is subjected to high loads during operation, so that an optimum construction of the exchangeable tooth may be obtained, this in contrast to the usual constructions, wherein a tooth is integral with the other part of the jaw.

The fixed jaw is provided with a rectilinear knife 53, which may be built up of several sections, which knife is slightly staggered in a direction perpendicularly to the pivot pin 10 with respect to the knives 38 and 38', in such a manner that when the two jaws 12 and 13 move towards each other the knives 38 and 38' will move along the knife 53 so as to carry out a cutting action.

A short guide knife 54, which is secured to the plate 16 of the fixed jaw 12, is disposed near the free end of the fixed jaw 12, opposite the knife 53, which is secured to the plate 17 of the fixed jaw 12. At the end of the movement of the jaw 13 towards the jaw 12 the end of the knife 38' located furthest from the pivot pin 10 will be accommodated between the two knives 53 and 54, so that a good guiding of the pivotable jaw 13 with respect to the fixed jaw 12 is obtained, in order to prevent the two jaws 12 and 13 from moving out transversely to the longitudinal direction of the knives with respect to each other.

The above-described jaws 12 and 13 are particularly suitable both for crushing concrete and for cutting iron sections. As a result of the construction described a large opening between the two jaws may be obtained thereby when the movable jaw 13 is opened with respect to the fixed jaw 12, whilst upon closing of the jaws the material is prevented from completely moving towards the free ends of the jaws, which has the further advantage that the force required for moving the jaws towards each other when the profiles are being cut may be kept comparatively low.

As likewise mentioned the guide knife 54 provides a good guiding of the two jaws with respect to each other upon closing of the jaws.

In addition the crusher tooth 39 may be used during operation for crushing the concrete shell or the like which may surround the sections to be cut.

As is shown in more detail in Figure 8 a valve mechanism 60 is secured to one end of the setting cylinder 8.

Pipes 62 and 63 are provided for the supply and discharge of oil to both sides of the piston 61 secured to the piston rod 14. The pipe 62 is in open communication with the interior of the cylinder 8 at the side of the piston 61 remote from the piston rod 14. Furthermore both the pipe 62 and the pipe 63 are connected to a valve 64 forming part of the valve mechanism 60, which valve is adjustable in two positions. In the position of said valve illustrated in the Figure the pipe 62 is in open communication with a pipe 65 via said valve, said pipe 65 being in communication with the interior of the cylinder 8 at the rod side of the piston 61.

In a second position of the valve 64 the connection between the pipe 62 and the pipe 65 will be closed and an open communication will have been effected between the pipe 63 and the pipe 65.

When the pivotable jaw 12 moves towards the fixed jaw 13, oil will be supplied, via the pipe 62, to the cylinder 8 at the side of the piston 61 remote from the piston rod 14, as a result of which the piston rod 14 will be moved towards the left in Figure 8. As long as the jaw meets with little resistance thereby the arrangement will be as shown in Figure 8, which will not only result in oil being supplied to the cylinder 8 via the line 62, but also in oil squeezed out of the cylinder 8 to the left of the piston 61 in Figure 8 flowing into the cylinder space located to the right of the piston through the pipe 65 and the valve 64, as a result of which a quick outward movement of the piston rod 14 and thus a quick pivoting of the pivotable jaw 13 towards the fixed jaw 12 is obtained.

When the pivotable jaw 13 meets with more resistance the pressure within the pipe 62 will run up and pressurized fluid will be supplied to the valve 64, via a control valve 66, in order to set the valve 64 from the position shown in Figure 8 to the second position, in which the fluid flowing out of the cylinder 8 via the pipe 65 is discharged via the pipe 63. At this stage the movement of the piston rod 14 and thus the pivoting of the pivotable jaw 13 only takes place by means of fluid supplied through the pipe 62. Consequently this pivoting of the jaw will take place more slowly but with greater force.

When the pivotable jaw 13 is to be pivoted in a direction remote from the fixed jaw 12, pressurized fluid will be supplied through the pipe 63. Via a further control valve 67 pressurized oil is also supplied to the valve 64 thereby, in order to retain said valve in the aforesaid second position, in which the pipe 63 is in open communication with the pipe 65. The oil present in the cylinder 8 to the right of the piston 61, seen in Figure 8, may be discharged through the pipe 62 thereby.

Since the valve mechanism 60 is mounted directly on one end of the cylinder 8, a compact construction is obtained and the amount of heat generated in the hydraulic system is kept to a minimum.

From the above description it will be apparent that the two jaws 12 and 13 can be readily disconnected from the frame 1 by removing the pins 10, 11 and 15. The disconnected jaws will remain pivotally coupled together thereby, by means of the bushing 20, which is fixedly connected to the fixed jaw 12. As a result of this it becomes possible to exchange the jaws 12 and 13 in a quick and simple manner for other pairs of jaws, which are more particularly suited for other activities, for example for breaking concrete, cutting and splitting wood and the like.

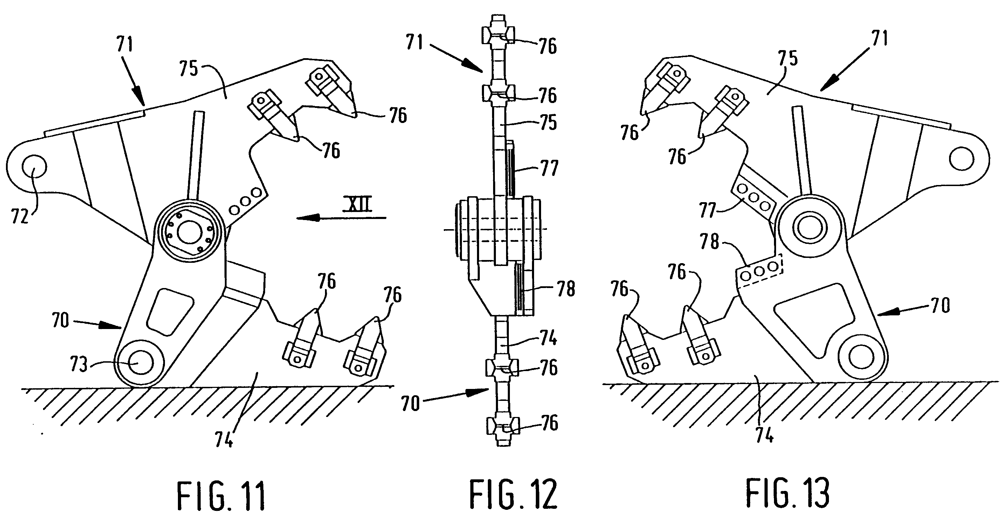

Thus the jaws 12 and 13 may be exchanged for the jaws 70 and 71 illustrated in Figures 11 - 13, which are pivotally coupled together in a similar manner as described above. Near one end the pivotable jaw 71 is thereby provided with a hole 72 for passing the pin 15, by means of which the jaw 71 in question may be coupled to the piston rod 14 of the setting cylinder 8, whilst the fixed jaw 70 is provided with a passage 73 for passing the pin 11 by means of which the jaw may be fixed to the frame part 3.

As is furthermore apparent from Figures 11 - 13 the two jaws 70 and 71 in this embodiment are provided with plate-shaped bodies 74 and 75 respectively, to which crusher teeth 76 corresponding with the above-described crusher tooth 39 are secured in a manner similar to that described with regard to the crusher tooth 39. The construction is thereby such that when the jaws move towards each other the crusher teeth 76 come into contact with each other.

This combination of jaws illustrated in Figures 11 - 13 is in particular intended for crushing concrete, such as for example concrete floors and foundations, as well as walls of buildings and the like.

Near the pivot pin about which the two jaws pivot with respect to each other short intermating knives 77 and 78 are furthermore provided, by means of which reinforcing steel, which may become exposed when reinforced concrete is being crushed, can be cut through.

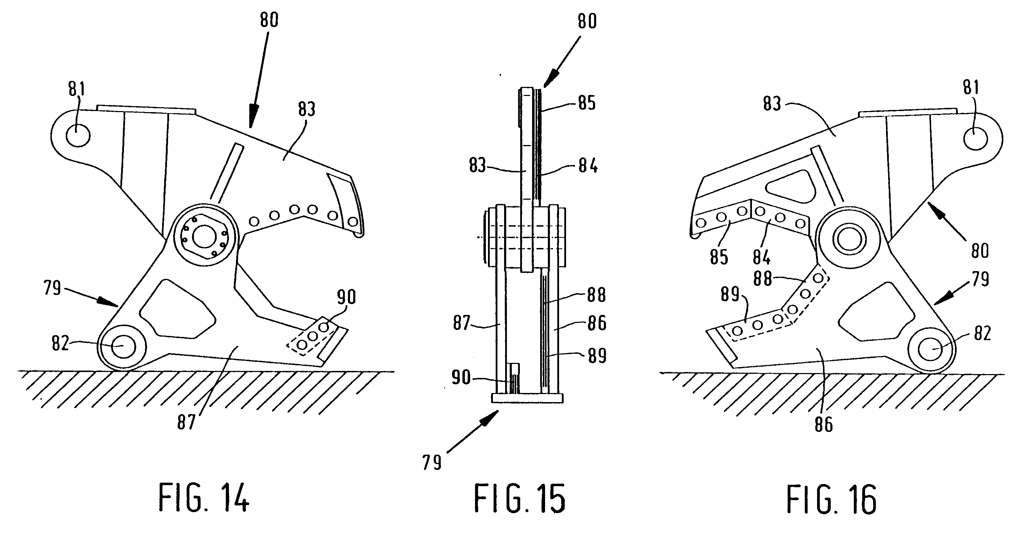

Figures 14 - 16 show a further embodiment of two cooperating jaws 79 and 80, wherein the jaw 79 is the fixed jaw to be connected to the frame 1 and the jaw 80 is the pivotable jaw. Also in this embodiment said jaws are pivotally coupled together, in a similar manner as described above with reference to for example the jaws 12 and 13, by means of a bush in which the pivot pin 10 may be accommodated. Furthermore the jaw 80 is provided with a hole 81, through which the pin 15 may be passed, whilst the jaw 79 is provided with a passage for accommodating the pin 11.

As is furthermore apparent from Figures 14 - 16 the movable jaw 80 is provided with a plate-shaped body 83, to which two knives 84 and 85 are secured, whose cutting edges include an obtuse angle with each other.

The fixed jaw 79 is provided with two plate parts 86 and 87 extending parallel to each other. Two knives 88 and 89, whose cutting edges include an obtuse angle with each other, are secured to the plate part 86. Furthermore a short knife 90 is secured to the free end of the plate part 87.

Said jaws are in particular configured so as to form a cutting device for cutting scrap iron and iron sections. At the end of the closing movement the knife 85 will be accommodated between the knife 89 and the knife 90, as a result of which a good guiding of the two jaws with respect to each other will be obtained upon closing. As a result of the above-described arrangement of the knives 84, 85 and 88, 89 the material to be cut is furthermore prevented from moving out of the jaw upon closing.

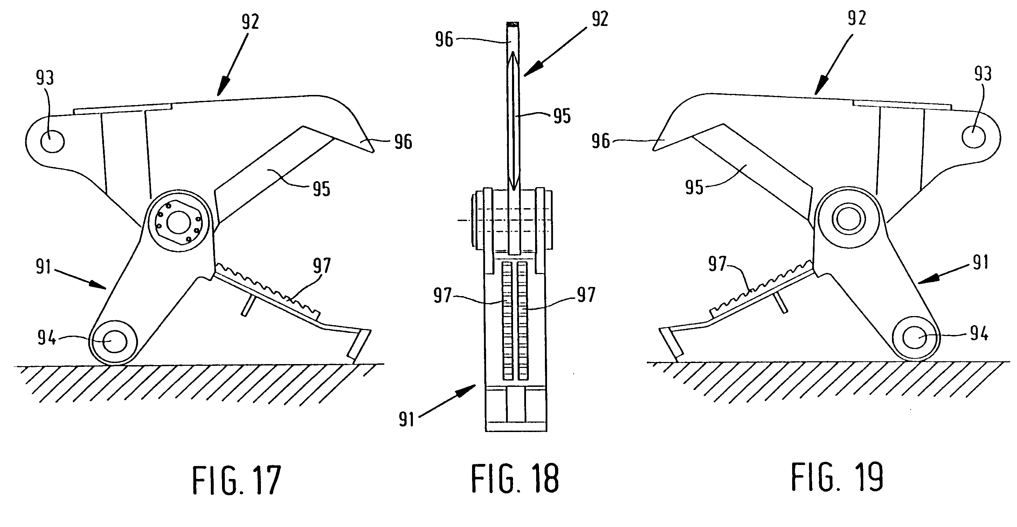

Figures 17 - 19 show two jaws 91 and 92, which may be coupled to the frame 1 instead of the jaws 12 and 13, in order to form a wood cutting device, which is in particular suited for cutting and splitting wood, logs, root ends and the like. Also in this embodiment the jaw 92 will be the movable jaw and the jaw 91 will be the fixed jaw. For this purpose the jaw 92 is provided with a hole 93 for passing through the pin 15, by means of which the movable jaw 92 may be coupled to the piston rod 14 of the setting cylinder 8. The fixed jaw 91 is provided with a passage 94 for passing through the pin 11, by means of which the fixed jaw 91 is fixedly connected to the frame 1. The movable jaw 92 is provided with a rectilinear knife 95 and furthermore, at its free end, with a projecting tip 96. The fixed jaw is provided with two serrated strips 97, which are sufficiently spaced apart for the knife 95 to engage therebetween.

The serrated profile 97 prevents the material to be cut from moving out of the jaws during cutting.

From the above it will be apparent that the invention provides a device for crushing and/or cutting material, which device is provided with cooperating and readily exchangeable jaws, so that the device can be simply and readily adapted to the specific material to be crushed or cut by means of the device.

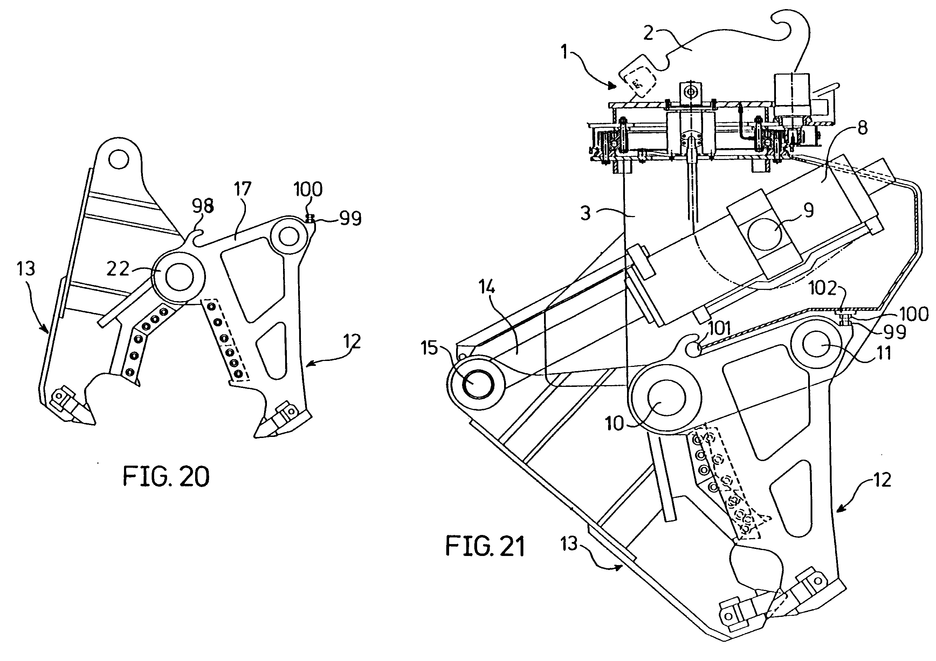

The device shown in Figures 20 and 21 at least substantially corresponds with the device shown in Figures 1 - 8 and consequently the parts shown in Figures 20 and 21 have been given the same reference numerals as corresponding parts shown in Figures 1 - 8.

In the embodiment shown in Figures 20 and 21 hook-shaped coupling means 98 are secured to the plate-shaped parts 16 and 17 (see also Figure 6) of the fixed jaw 12, near the bush 20 interconnecting the jaws 12 and 13, which coupling means are accessible at a side remote from the pivotable jaw 13 as appears from Figure 20.

Nuts 99 are furthermore secured to said plate-shaped parts 16 and 17, in points located near the openings for receiving the pin 11, in which nuts set bolts 100 are threaded.

As is furthermore apparent in particular from Figure 21, a cylindrical rod 101 extending parallel to the journals 9 is furthermore secured between two plates forming part of the frame part 3, and between which the setting cylinder 8 is positioned. When the jaws 12 and 13 are coupled to the frame 3 in the above-described manner, as shown in Figure 21, the rod 101 is positioned within the hook-shaped parts 98. The heads of the bolts 100 thereby abut against the stop plates 102 secured to the frame 3.

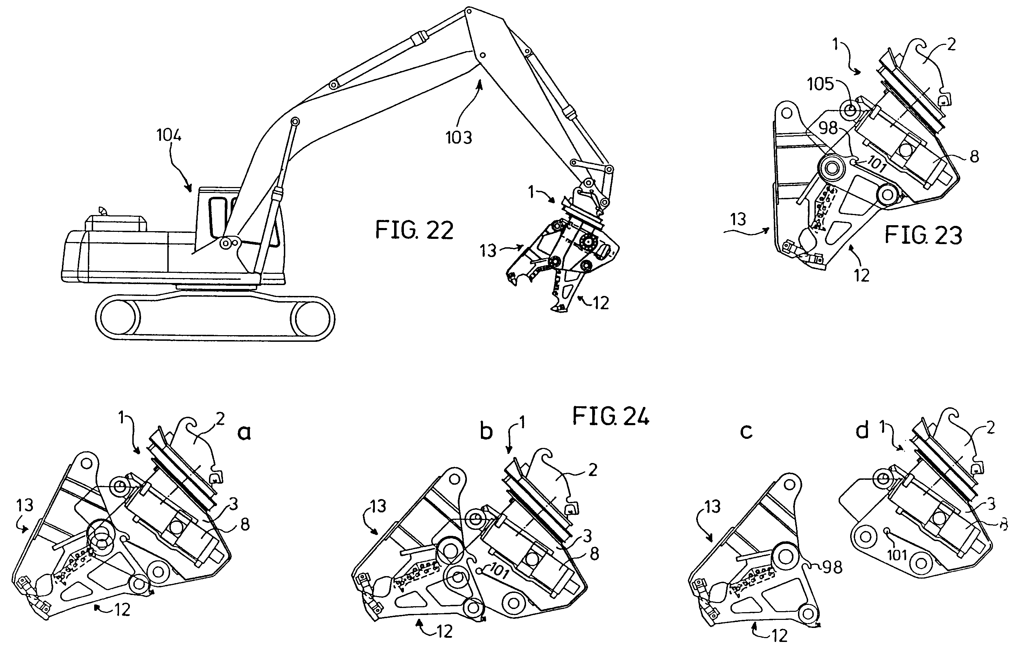

In order to exchange the jaws of a device suspended in the manner shown in Figure 22 from the jib 103 of an excavator 104 the pins 10, 11 and 15 may be removed in the position in which the device is suspended from the jib in the manner shown in Figure 22, preferably after the jaws have been closed. The jaws will remain coupled to the jib 103 thereby, because the jaws will remain supported by the hook-shaped parts 98 engaging behind the rod 101 of the frame part 3.

After the pin 15 has been removed, a rod 105 may be pulled through the eye of the piston rod 14, as illustrated in Figure 23, and it is possible to have said rod 105 supported by a part of the frame 3, in the manner shown in Figure 23, by withdrawing the piston rod 14, so that undesirable pivoting of the setting cylinder 8 on the journals 9 is prevented.

In order to uncouple the jaws the free end of the fixed jaw 12 may be supported on the ground by suitably pivoting the jib 103 of the excavator 104, as is illustrated on the left in Figure 24. Then the frame part 3 may be suitably pivoted by manipulating the jib 103, as is illustrated from the left towards the right in the successive Figures in Figure 24, whereby first the frame part 3 is pivoted anti-clockwise about the central axis of the rod 101, seen in the Figures, and is furthermore also moved slightly downwards, so that the fixed jaw 12 will come to rest on the ground with its side remote from the movable jaw 13, after which the rod 101 may be completely withdrawn from the hook-shaped parts 98 and the coupled jaws 12 and 13 may be left behind on the ground, as depicted in the right-hand part of Figure 24.

It will be apparent, that the reverse order will be used for coupling the jaws. First the rod or pin 101 is hooked into the hook-shaped parts 98 again by suitably manipulating the frame part 3 coupled to the end of the jib 103, after which the coupled jaws may be lifted, in such a manner that they will pivot about the pin 101 until the set bolts 100 connected to the fixed jaw 12 will abut against the stop plates 102. In this position the passages provided in the jaws for receiving the pins 10 and 11 will be aligned with the respective passages in the frame part 3, so that a quick and simple insertion of the pins 10 and 11 can be effected after the jaws 12 and 13 have been picked up by the frame part 3. Any deviations in the position of the passage for receiving the pin 11 may be set off by rotating the set bolts 100.

After the pins 10 and 11 have been provided also the eye secured to the end of the piston rod may be moved to a suitable position for inserting the pin 15, by pulling out the piston rod 14.

It will be apparent that thus the exchanging of the jaws can be carried out in a quick and simple manner, since the openings intended for receiving the pins 10 and 11 are automatically aligned when the jaws are being coupled to the frame part 3.

Furthermore it will be apparent that other solutions than the above-described embodiment for coupling the jaws 12 and 13 to the frame part are conceivable. Thus the hook-shaped coupling parts might be secured to the frame 3 and the parts cooperating with said hook-shaped coupling parts might be secured to the fixed jaw 13.

## Claims

1. A device for crushing and/or cutting material, said device being provided with a frame (2, 2', 3) having coupling means (4, 4') by which said frame (2, 2', 3) can be coupled to the jib of an excavator or the like, whilst a first jaw (12) occupying a fixed position with respect to the frame (2, 2', 3) during operation is connected to the frame, as is a second jaw (13) coooperating with said first jaw (12), said second jaw (13) being pivotable about a pivot pin (10) with respect to the frame (2, 2', 3) by means of a setting cylinder (8) in a direction towards the first jaw (12) and in a direction away from the first jaw (12), and wherein said first jaw (12) is detachably connected to the frame (2, 2', 3) by means of said pivot pin (10) and a second pin (15) located at some distance from said pivot pin (10), and the second jaw (13) is detachably connected to the frame (2, 2', 3) by means of said pivot pin (10) and a pin (15) coupling the second jaw (13) to the setting cylinder (8), characterized in that said first jaw (12) has been provided with coupling means (98) near said pivot pin (10), which coupling means (98) cooperate with coupling means (101) secured to the frame (2, 3) so that said coupling means (98, 101) may be hooked together in order to couple the jaws (12, 13) to the frame (2, 3) and whereby said coupling means (98, 101) are constructed in such a manner, that the jaws (12, 13) coupled to the frame (2, 3) by te coupling means (98, 101) are pivotable relative to the frame (2, 3) at the location of the coupling means (98, 101), about a pivot axis extending parallel to the pivot pin (10).

2. A device according to claim 1, characterized in that one jaw (12) is provided with two hubs (18, 19), which house a bush (20) secured to said jaw (12), which is suitable for accommodating said pivot pin (10), whilst a hub (28) of the other jaw (13) surrounding said bush (20) is located between the two hubs (18, 19) of the one jaw (12).

3. A device according to claim 2, characterized in that said fixed jaw (12) comprises two plate-shaped parts (16, 17), of which the hubs (18, 19) accommodating the bush (20) form part, whilst said movable jaw (13) is provided with one plate-shaped part (29), to which the hub (28) located between the hubs (18, 19) of the fixed jaw (12) is secured.

4. A device according to claim 2 or 3, characterized in that said bush (20) is at one end provided with a projecting circumferential collar (21), which is fixed to one side of one (18) of the hubs.

5. A device according to any one of the claims 2 - 4, characterized in that said pivot pin (10) is supported near its ends by two hubs (22, 26), which are secured to frame parts (5, 6), whilst one of said hubs (26) accommodates a bush (24) surrounding the pin (10), which can be pressed against a hub (19) of a jaw (12) by means of a nut (27) to be screwed on one end of the pin (10).

6. A device according to any one of the preceding claims, characterized in that said pin (10) has a stepped configuration and the bore accommodating said pin (10) has a stepped configuration corresponding therewith, the configuration being such that the outer circumference of the pin (10) is only in direct contact with the inner circumference of the bush (20) along a certain part of its length near the end portions of the bush.

7. A device according to any one of the preceding claims, characterized in that the frame is built up of two parts (2, 3), which are pivotable with respect to each other about a pivot perpendicularly crossing or intersecting said pivot pin.

8. A device according to any one of the preceding claims, characterized in that the cooperating jaws (12, 13) are provided with mating knives (38, 53), whilst one of said jaws (12) is provided with a further knife (54) near its free end, in such a manner that at the end of the closing movement the knife (38') (knives) of the other jaw (13) is (are) guided between the knives (53, 54) of the one jaw (12).

9. A device according to any one of the preceding claims, characterized in that the movable jaw (13) is provided with two knives (38, 38'), whose edges include an obtuse angle with each other, whilst the fixed jaw (12) is provided with one or more knives (53), whose cutting edges are rectilinear.

10. A device according to any one of the preceding claims, wherein one jaw is provided with at least one exchangeable crusher tooth (39), which is provided with two wings (41, 42) extending parallel to each other, between which a plate-shaped part (29) of the jaw (13) in question is accommodated, whilst the wings (41, 42) are retained between cams (48, 49) secured to plate-shaped part in question.

11. A device according to claim 10, characterized in that a part (40) of said crusher tooth (39) contiguous to the wings (41, 42) is accommodated in a recess (45) provided in the plate-shaped part (29), whilst cams (43, 44) provided on said crusher tooth (39) abut against one side (47) of the plate-shaped part (29) on either side of said recess (45).

12. A device according to any one of the preceding claims, characterized in that the two jaws (70, 71) are provided with crusher teeth (76) at their facing edges, whilst the jaws are furthermore provided with short, intermating knives (77, 78) near the pivot pin (10).

13. A device according to any one of the preceding claims, characterized in that the movable jaw (92) is provided with a cutting knife (95) and a projecting tip (96), whilst the fixed jaw (91) is provided with serrated strips (97), whereby the knife (95) may engage between the serrated strips (97) when the jaws move towards each other.

14. A device according to any one of the preceding claims, characterized in that the fixed jaw (12) is provided with two spaced-apart hubs (32, 33) for accommodating the pin (11) by means of which the fixed jaw (12) is secured to the frame (2, 3), whereby the two hubs (32, 33) closely surround the pin (11) in question, whilst the pin (11) is furthermore passed through two hubs (30, 31) which form part of the frame (2, 3) and which are located at the sides of the hubs (32, 33) forming part of the fixed jaw (12) that face away from each other whilst a nut (37) is screwed on the free end of the pin (11), by means of which the hubs (30 - 33) can be pressed towards each other.

15. A device according to any one of the preceding claims, characterized in that the two hubs (32, 33) forming part of the fixed jaw (12) and accommodating the pin (11) have different diameters and that the pin has a correspondingly stepped configuration.

16. A device according to any one of the preceding claims, characterized in that a valve block (60) is provided on one end of the setting cylinder (8), said valve block being provided with a valve (64) which is adjustable in two positions, whereby in a first position of the valve (64) a supply pipe (62), via which a fluid can be supplied to the setting cylinder (8) in the space present at the side of the piston (61) in the setting cylinder (8) facing away from the piston rod (14), is in open communication with a bypass (65) which is connected to the rod side of the cylinder (8), whilst in a second position the connection between said supply and/or discharge pipe (62) and the bypass (65) is closed, whereby the change-over from the first position to the second position is effected when a predetermined pressure in the supply/discharge pipe (62) is exceeded.

17. A device according to any preceding claim, characterized in that said coupling means are on the one hand made up of hook-shaped parts (98) and on the other hand by a pin (101) fitting into said hook-shaped parts (98).

18. A device according to any preceding claim, characterized in that adjusting means (99, 100) are provided in spaced-apart relationship from the coupling means (98, 100), by means of which the jaws (12, 13) can be adjusted about the pivot pin (101) relative to the frame (2, 3).

19. A device according to claim 18, characterized in that said adjusting means comprise set bolts (100) connected to the first jaw (12) and the frame (2, 3) respectively, whereby the free ends of said set bolts (100) abut against parts of the frame (2, 3) and the first jaw (12) respectively.

## Patentansprüche

1. Eine Vorrichtung zum Brechen und/oder Schneiden von Material, wobei die genannte Vorrichtung mit einem Rahmen (2, 2', 3) versehen ist, der Kopplungsmittel (4, 4') aufweist, mittels derer der genannte Rahmen (2, 2', 3) an den Ausleger eines Baggers oder dergleichen koppelbar ist, während eine erste Backe (12), die eine feste Position in Bezug zu dem Rahmen (2, 2', 3) während des Betriebs einnimmt, mit dem Rahmen verbunden ist, wie dies eine zweite Backe (13) ist, die mit der genannten ersten Backe (12) zusammenwirkt, wobei die genannte zweite Backe (13) um einen Drehzapfen (10) in Bezug zu dem Rahmen (2, 2', 3) mittels eines Stellzylinders (8) in einer Richtung auf die erste Backe (12) zu und in einer Richtung weg von der ersten Backe (12) schwenkbar ist und wobei die genannte erste Backe (12) abnehmbar mit dem Rahmen (2, 2', 3) verbunden ist mittels des genannten Drehzapfens (10) und eines zweiten Zapfens (15), der in einigem Abstand zu dem genannten Drehzapfen (10) angeordnet ist, und die zweite Backe (13) abnehmbar mit dem Rahmen (2, 2', 3) verbunden ist mittels des genannten Drehzapfens (10) und eines Zapfens (15), der die zweite Backe (13) an den Stellzylinder (8) koppelt, dadurch gekennzeichnet, daß die genannte erste Backe (12) mit Kopplungsmitteln (98) nahe des genannten Drehzapfens (10) versehen ist, wobei diese Kopplungsmittel (98) mit Kopplungsmitteln (101), die an dem Rahmen (2, 3) befestigt sind, zusammenwirken, so daß die genannten Kopplungsmittel (98, 101) miteinander verhakbar sind, um die Backen (12, 13) an den Rahmen (2, 3) zu koppeln, und wobei die genannten Kopplungsmittel (98, 101) in einer Weise ausgebildet sind, daß die durch die Kopplungsmittel (98, 101) an den Rahmen (2, 3) gekoppelten Backen (12, 13) an dem Ort der Kopplungsmittel (98, 101) relativ zu dem Rahmen (2, 3) um eine Schwenkachse schwenkbar sind, die sich parallel zu dem Drehzapfen (10) erstreckt.

2. Eine Vorrichtung nach Anspruch 1, dadurch gekennzeichnet, daß eine Backe (12) mit zwei Naben (18, 19) versehen ist, in denen eine mit der genannten Backe (12) verbundene Hülse (20) untergebracht ist, die zur Aufnahme des genannten Drehzapfens (10) geeignet ist, während eine Nabe (28) der anderen Backe (13), die die genannte Hülse (20) umgibt, zwischen den zwei Naben (18, 19) der einen Backe (12) angeordnet ist.

3. Eine Vorrichtung nach Anspruch 2, dadurch gekennzeichnet, daß die genannte feste Backe (12) zwei plattenförmige Teile (16, 17) aufweist, von denen die Naben (18, 19), die die Hülse (20) aufnehmen, einen Teil bilden, während die genannte bewegliche Backe (13) mit einem plattenförmigen Teil (29) versehen ist, an dem die Nabe (28) befestigt ist, die zwischen den Naben (18, 19) der festen Backe (12) angeordnet ist.

4. Eine Vorrichtung nach Anspruch 2 oder 3, dadurch gekennzeichnet, daß die genannte Hülse (20) an einem Ende mit einer vorstehenden Umfangsschulter (21) versehen ist, der an einer Seite einer (18) der Haben befestigt ist.

5. Eine Vorrichtung nach einem der Ansprüche 2 bis 4, dadurch gekennzeichnet, daß der genannte Drehzapfen (10) nahe seinen Enden durch die zwei Naben (22, 26) getragen ist, die mit Rahmenteilen (5, 6) verbunden sind, während eine der genannten Naben (26) eine Hülse (24) aufnimmt, die den Zapfen (10) umgibt, die gegen eine Nabe (19) einer Backe (12) mittels einer Mutter (27) drückbar ist, die auf ein Ende des Zapfens (10) aufschraubbar ist.

6. Eine Vorrichtung nach einem der vorhergehenden Ansprüche, dadurch gekennzeichnet, daß der genannte Zapfen (10) eine abgestufte Konfiguration aufweist und die Bohrung, die den genannten Zapfen (10) aufnimmt, eine dieser Konfiguration entsprechende abgestufte Konfiguration aufweist, wobei die Konfiguration derart ist, daß der äußere Umfang des Zapfens (10) nur in direktem Kontakt mit dem inneren Umfang der Hülse (20) entlang eines bestimmten Teiles ihrer Länge nahe den Endabschnitten der Hülse ist.

7. Eine Vorrichtung nach einem der vorhergehenden Ansprüche, dadurch gekennzeichnet, daß der Rahmen aus zwei Teilen (2, 3) aufgebaut ist, die relativ zueinander schwenkbar sind um einen Drehpunkt, der den genannten Zapfen senkrecht kreuzt oder schneidet.

8. Eine Vorrichtung nach einem der vorhergehenden Ansprüche, dadurch gekennzeichnet, daß die zusammenwirkenden Backen (12, 13) mit zusammenpassenden Messern (38, 53) versehen sind, wobei eine der genannten Backen (12) mit einem weiteren Messer (54) nahe ihrem freien Ende in einer solchen Weise versehen ist, daß am Ende der Schließbewegung das Messer (38') (die Messer) der anderen Backe (13) zwischen den Messern (53, 54) der einen Backe (12) geführt ist (geführt sind).

9. Eine Vorrichtung nach einem der vorhergehenden Ansprüche, dadurch gekennzeichnet, daß die bewegliche Backe (13) mit zwei Messern (38, 38') versehen ist, deren Kanten miteinander einen stumpfen Winkel einschließen, während die feste Backe (12) mit einem Messer oder mehreren Messern (53) versehen ist, deren Schneidkanten geradlinig sind.

10. Eine Vorrichtung nach einem der vorhergehenden Ansprüche, wobei eine Backe mit wenigstens einem austauschbaren Brecherzahn (39) versehen ist, der mit zwei Flügeln (41, 42) versehen ist, die sich parallel zueinander erstrecken und zwischen denen ein plattenförmiges Teil (29) der betreffenden Backe (13) aufgenommen ist, während die Flügel (41, 42) zwischen Ansätzen (48, 49), die mit dem betreffenden plattenförmigen Teil verbunden sind, gehalten sind.

11. Eine Vorrichtung nach Anspruch 10, dadurch gekennzeichnet, daß ein Teil (40) des genannten Brecherzahnes (39) angrenzend an die Flügel (41, 42) in einer Ausnehmung (45) aufgenommen ist, die in dem plattenförmigen Teil (29) vorgesehen ist, während Ansätze (43, 44), die an dem genannten Brecherzahn (39) vorgesehen sind, an einer Seite (47) des plattenförmigen Teiles (29) auf beiden Seiten der genannten Ausnehmung (45) anliegen.

12. Eine Vorrichtung nach einem der vorhergehenden Ansprüche, dadurch gekennzeichnet, daß die zwei Backen (70, 71) mit Brecherzähnen (76) an ihren einander zugewandten Kanten versehen sind, während die Backen ferner mit kurzen, zwischeneinander passenden Messern (77, 78) nahe des Drehzapfens (10) versehen sind.

13. Eine Vorrichtung nach einem der vorhergehenden Ansprüche, dadurch gekennzeichnet, daß die bewegliche Backe (92) mit einem Schneidemesser (95) und einer vorstehenden Spitze (96) versehen ist, während die feste Backe (91) mit gezahnten Streifen (97) versehen ist, wobei das Messer (95) zwischen die gezahnten Streifen (97) eingreifen kann, wenn sich die Backen aufeinander zu bewegen.

14. Eine Vorrichtung nach einem der vorhergehenden Ansprüche, dadurch gekennzeichnet, daß die feste Backe (12) mit zwei zueinander beabstandeten Naben (32, 33) zur Aufnahme des Zapfens (11) versehen ist, mittels dessen die feste Backe (12) an dem Rahmen (2, 3) befestigt ist, wobei die zwei Naben (32, 33) den betreffenden Zapfen (11) eng umgeben, während der Zapfen (11) sich ferner durch zwei Naben (30, 31) erstreckt, die einen Teil des Rahmens (2, 3) bilden und an den einander abgewandten Seiten der Naben (32, 33) angeordnet sind, die einen Teil der festen Backe (12) bilden, während eine Mutter (37) auf das freie Ende des Zapfens (11) aufgeschraubt ist, mittels derer die Naben (30-33) aufeinander zu drückbar sind.

15. Eine Vorrichtung nach einem der vorhergehenden Ansprüche, dadurch gekennzeichnet, daß die zwei Naben (32, 33), die einen Teil der festen Backe (12) bilden und den Zapfen (11) aufnehmen, unterschiedliche Durchmesser aufweisen und daß der Zapfen eine entsprechend abgestufte Konfiguration aufweist.

16. Eine Vorrichtung nach einem der vorhergehenden Ansprüche, dadurch gekennzeichnet, daß ein Ventilkopf (60) an einem Ende des Stellzylinders (8) vorgesehen ist, wobei der genannte Ventilkopf mit einem Ventil (64) versehen ist, das in zwei Positionen einstellbar ist, wobei sich in einer ersten Position des Ventiles (64) eine Zuführleitung (62), durch die Fluid zu dem Stellzylinder (8) in den Raum zuführbar ist, der sich an der Seite des Kolbens (61) in dem Stellzylinder (8), der von der Kolbenstange (14) abgewandt ist, befindet, in offener Verbindung zu einer Umgehungsleitung (65) verbindet, die mit der Stangenseite des Zylinders (8) verbunden ist, während in einer zweiten Position die Verbindung zwischen der genannten Zuführ- und/oder Abführleitung (62) und der Umgehungsleitung (65) geschlossen ist, wobei der Wechsel von der ersten Position in die zweite Position bewirkt wird, wenn ein vorbestimmter Druck in der Zuführ/Abführleitung (62) überschritten wird.

17. Eine Vorrichtung nach einem der vorhergehenden Ansprüche, dadurch gekennzeichnet, daß die genannten Kopplungsmittel einerseits aus hakenförmigen Teilen (98) und andererseits aus einem Zapfen (101) bestehen, der in die genannten hakenförmigen Teile (98) paßt.

18. Eine Vorrichtung nach einem der vorhergehenden Ansprüche, dadurch gekennzeichnet, daß die Einstellmittel (99, 100) in einer zu den Kopplungsmitteln (98, 100) beabstandeten Beziehung vorgesehen sind, mittels derer die Backen (12, 13) um den Drehzapfen (101) relativ zu dem Rahmen (2, 3) einstellbar sind.

19. Eine Vorrichtung nach Anspruch 18, dadurch gekennzeichnet, daß die genannten Einstellmittel Stellschrauben (100) aufweisen, die mit der ersten Backe (12) bzw. dem Rahmen (2, 3) verbunden sind, wobei die freien Enden der genannten Stellschrauben (100) an Teilen des Rahmens (2, 3) bzw. der ersten Backe (12) anliegen.

## Revendications

1. Un dispositif pour concasser et/ou couper un matériau, ledit dispositif étant muni d'un cadre (2,2',3) ayant des moyens de couplage (4,4') par lesquels ledit cadre (2,2',3) peut être couplé au gabarit d'un excavateur ou analogue, alors qu'une première mâchoire (12) occupant une position fixe par rapport au cadre (2,2',3) pendant le fonctionnement est reliée au cadre de même qu'une seconde mâchoire (13) coopérant avec ladite première mâchoire (12), ladite deuxième mâchoire(13) étant apte à pivoter autour d'un tourillon (10) par rapport au cadre (2,2',3) au moyen d'un vérin de manoeuvre (8) dans une direction vers la première mâchoire (12) et dans une direction à distance de la première mâchoire (12) et dans lequel ladite première mâchoire (12) est reliée de manière amovible au cadre (2,2',3) au moyen dudit tourillon (10) et d'un second axe (15) disposé à une certaine distance dudit tourillon (10) et la deuxième mâchoire (13) est reliée de manière amovible au cadre (2,2',3) au moyen dudit tourillon (10) et d'un axe (15) reliant la deuxième mâchoire (13) au vérin de manoeuvre (8), caractérisé en ce que ladite première mâchoire (12) a été munie d'un moyen de couplage (98)près dudit tourillon (10), lequel moyen de couplage (98) coopère avec le moyen de couplage (101) fixé au cadre (2,3), si bien que lesdits moyens de couplage (98,101) peuvent être accrochés conjointement afin de coupler les mâchoires (12,13) au cadre (2,3) et ainsi lesdits moyens de couplage (98,101) sont construits de telle façon que les mâchoires (12,13) couplées au cadre (2,3) par les moyens de couplage (98,101) sont aptes à pivoter par rapport au cadre (2,3) à l'emplacement des moyens de couplage (98, 101) autour d'un axe de pivotement s'étendant parallèlement au tourillon (10).

2. Un dispositif selon la revendication 1, caractérisé en ce qu'une mâchoire (12) est munie de deux moyeux (18,19) qui logent un fourreau (20) fixé à ladite mâchoire (12) qui est approprié pour recevoir ledit tourillon (10), alors qu'un moyeu (28) de l'autre mâchoire (13) entourant ledit fourreau (20) est disposé entre les deux moyeux (18,19) de la mâchoire (12).

3. Un dispositif selon la revendication 2, caractérisé en ce que ladite mâchoire fixe (12) comprend deux parties en forme de plaque (16,17) dont les moyeux (18,19) recevant le fourreau (20) forment une partie, alors que ladite mâchoire mobile (13) est munie d'une partie en forme de plaque (29) à laquelle le moyeu (28) disposé entre les moyeux (18,19) de la mâchoire fixe (12) est fixé.

4. Un dispositif selon la revendication 2 ou 3, caractérisé en ce que ledit fourreau (20) est à une extrémité muni d'un collier (21) circonférentiel faisant saillie qui est fixé sur un côté d'un (18) des moyeux.

5. Un dispositif selon l'une quelconque des revendications 2 à 4, caractérisé en ce que ledit tourillon (10) est supporté près de ses extrémités par deux moyeux (22,26) qui sont fixés aux parties de cadre (5,6) alors que l'un desdits moyeux (26) reçoit un fourreau (24) entourant le tourillon (10) qui peut être poussé contre un moyeu (19) d'une mâchoire (12) au moyen d'un écrou (27) devant être vissé sur une extrémité du tourillon (10).

6. Un dispositif selon l'une quelconque des revendications précédentes, caractérisé en ce que ledit tourillon (10) a une configuration échelonnée et l'alésage recevant ledit tourillon (10) a une configuration échelonnée correspondant à celle-ci, la configuration étant telle que la circonférence extérieure du tourillon (10) est seulement en contact direct avec la circonférence intérieure du fourreau (20) le long d'une certaine partie de sa longueur près des parties d'extrémité du fourreau.

7. Un dispositif selon l'une quelconque des revendications précédentes, caractérisé en ce que le cadre est réalisé en deux parties (2,3) qui sont aptes à pivoter l'une par rapport à l'autre autour d'un pivot croisant ou coupant perpendiculairement ledit tourillon.

8. Un dispositif selon l'une quelconque des revendications précédentes, caractérisé en ce que les mâchoires coopérantes (12,13) sont munies de lames s'adaptant (38,53), alors que l'une desdites mâchoires (12) est munie d'une autre lame (54) près de son extrémité libre de telle façon qu'à la fin du mouvement de fermeture la lame (38') (les lames) de l'autre mâchoire (13) est (sont) guidée(s) entre les lames (53,54) de la mâchoire (12).

9. Un dispositif selon l'une quelconque des revendications précédentes, caractérisé en ce que la mâchoire mobile (13) est munie de deux lames (38,38') dont les bords font un angle obtus l'un avec l'autre alors que la mâchoire fixe (12) est munie d'une ou plusieurs lames (53) dont les bords de coupe sont rectilignes.

10. Un dispositif selon l'une quelconque des revendications précédentes, dans lequel une mâchoire est munie d'au moins une dent de concasseur échangeable (39) qui est pourvue de deux ailes (41,42) s'étendant en parallèle l'une avec l'autre entre lesquelles est reçue une partie en forme de plaque (29) de la mâchoire (13) en question, alors que les ailes (41,42) sont retenues entre des cames (48,49) fixées à la partie en forme de plaque en question.

11. Un dispositif selon la revendication 10, caractérisé en ce qu'une partie (40) de ladite dent de concasseur (39) contigue aux ailes (41,42) est reçue dans un évidement (45) prévu dans la partie en forme de plaque (29) tandis que les cames (43,44) prévues sur ladite dent de concasseur (39) butent contre un côté (47) de la partie en forme de plaque (29) sur l'un ou l'autre côté dudit évidement (45).

12. Un dispositif selon l'une quelconque des revendications précédentes, caractérisé en ce que les deux mâchoires (70,71) sont prévues avec les dents de concasseur (76) à leurs bords en vis-à-vis, tandis que les mâchoires sont munies, en outre, de courtes lames à inter-adaptation (77,78) près du tourillon (10).

13. Un dispositif selon l'une quelconque des revendications précédentes, caractérisé en ce que la mâchoire mobile (92) est munie d'une lame de coupe (95) et d'une pointe en saillie (96) alors que la mâchoire fixe (91) est munie de bandes dentelées (97) si bien que la lame (95) peut venir en prise entre les bandes dentelées (97) quand les mâchoires se déplacent l'une vers l'autre.

14. Un dispositif selon l'une quelconque des revendications précédentes, caractérisé en ce que la mâchoire fixe (12) est munie de deux moyeux espacés (32,33) pour recevoir l'axe (11) au moyen duquel la mâchoire fixe (12) est fixée au cadre (2,3) si bien que les deux moyeux (32,33) entourent étroitement l'axe (11) en question alors que l'axe (11) traverse, en outre, deux moyeux (30,31) qui forment une partie du cadre (2,3) et qui sont situés sur les côtés des moyeux (32,33) formant une partie de la mâchoire fixe (12) qui sont en vis-à-vis l'un de l'autre, tandis qu'un écrou (37) est vissé sur l'extrémité libre de l'axe (11) au moyen duquel les moyeux (30-33) peuvent être poussés les uns vers les autres.

15. Un dispositif selon l'une quelconque des revendications précédentes, caractérisé en ce que les deux moyeux (32,33) formant une partie de la mâchoire fixe (12) et recevant l'axe (11) ont des diamètres différents en ce que l'axe a une configuration échelonnée en correspondance.

16. Un dispositif selon l'une quelconque des revendications précédentes, caractérisé en ce qu'un bloc de clapet (60) est prévu sur une extrémité du vérin de manoeuvre (8), ledit bloc de clapet étant muni d'un clapet (64) qui est réglable dans deux positions si bien que dans une première position du clapet (64) une conduite d'alimentation (62) par l'intermédiaire de laquelle un fluide peut être alimenté au vérin de manoeuvre (8) dans l'espace présent sur le côté du piston (61) dans le vérin de manoeuvre (8) opposé à la tige de piston (14) est en communication d'ouverture avec une dérivation (65) qui est reliée au côté de tige du vérin (8), alors que dans une deuxième position, la liaison entre ladite conduite d'alimentation et/ou de décharge (62) et la dérivation (65) est fermée, de sorte que le changement de la première position à la deuxième position est effectué quand une pression prédéterminée dans la conduite d'alimentation/décharge (62) est dépassée.

17. Un dispositif selon l'une quelconque des revendications précédentes, caractérisé en ce que lesdits moyens de couplage sont, d'une part, constitués de parties en forme de crochets (98) et d'autre part d'un axe (101) s'adaptant dans lesdites parties en forme de crochets (98).

18. Un dispositif selon l'une quelconque des revendications précédentes, caractérisé en ce que les moyens de réglage (99, 100) sont prévus selon une relation espacée à partir des moyens de couplage (98,100) au moyen desquels les mâchoires peuvent être réglées autour du tourillon (101) par rapport au cadre (2,3).

19. Un dispositif selon la revendication 18, caractérisé en ce que lesdits moyens de réglage comprennent des boulons de manoeuvre (100) reliés à la première mâchoire (12) et au cadre (2,3) respectivement, si bien que les extrémités libres desdits boulons de manoeuvre (100) butent contre les partis du cadre (2,3) et la première mâchoire (12) respectivement.
